# EUROPEAN PATENT APPLICATION

(11) **EP 3 604 179 A1**
(43) Date of publication of application: **05.02.2020**
(21) Application number: 19188775.1
(22) Date of filing: 29.07.2019
(51) Int. Cl.: B65G 21/08, B65G 47/20, B65G 69/18

(54) **ASSEMBLY OF A DISCHARGE MODULE AND A COVER FOR A CONVEYOR BELT**

(30) Priority: 30.07.2018 BE 201805546
(71) Applicant: B.M.C., 8800 Roeselare (BE)
(72) Inventor: MOENS, Gert, 8840 STADEN (BE); COUVREUR, Christophe, 8510 ROLLEGEM (BE)
(74) Representative: Cardoen, Annelies Andréa C.

(57) **Abstract**

Assembly of a cover (1) and a discharge module (4, 8), wherein, in use, the discharge module (4, 8) extends through the cover (1) from above, so that bulk goods are dischargeable through the cover (1) by means of the discharge module (4, 8), wherein the cover (1) comprises a first and second covering strip (1a, 1b), wherein the covering strips (1a, 1b) are configured in order to extend in such a way that the covering strips (1a, 1b) extend on either side of the discharge module (4, 8) at the location of the discharge module (4, 8), and that, at the location of other positions, the covering strips (1a, 1b) extend largely next to each other and adjoin each other virtually completely, so that the covering strips (1a, 1b) together form a covering unit, and that the discharge module (4, 8) is displaceable with respect to the cover (1) and is configured in order to, during its displacement, move the covering strips (1a, 1b) apart at the front and move them towards each other again at the back.

## Description

The present invention relates to an assembly of a cover, for largely covering the top side of a conveyor belt, and a discharge module, wherein, in use, the discharge module extends through the cover from above, so that bulk goods are dischargeable through the cover by means of the discharge module, wherein the cover comprises a first and a second flexible elongate covering strip, wherein these covering strips are each respectively provided in order to largely cover a part of both parts of the top side of a conveyor belt and thus to largely cover the top side of a conveyor belt together, wherein the covering strips are joinable to each other along virtually their entire length and to this end each comprise an edge part which extends along the longitudinal direction and along virtually the entire length of the respective covering strip, and that, in use, the covering strips extend substantially along the same direction and next to each other, the covering strips extend on either side of the discharge module at the location of the position of the discharge module, and at the location of other positions, the edge parts of the covering strips adjoin each other virtually completely, and wherein the discharge module is displaceable with respect to the cover virtually along said direction.

By means of such a cover, the conveyor belt is protected against soiling and/or rain. The present invention also relates to a transport device comprising a conveyor belt, a cover which largely covers the top side of the conveyor belt and a discharge module which extends through the cover from above, so that bulk goods are dischargeable onto the conveyor belt through the cover by means of the discharge module.

Such assemblies and transport devices are used in harbours to transport bulk goods, which arrive by ship, onwards. During unloading of bulk goods which are on board a ship, such as grains, cement, fertilizers, etc. use is made, inter alia, of an unloading unit, which removes the bulk goods from the ship, and a conveyor belt, wherein the unloading unit discharges the bulk goods onto the conveyor belt. This unloading unit may be a separate unit which is displaceable along the quayside and/or the ship may have its own unloading unit.

With products which should not become wet and/or soiled, such as grains, conveyor belts which are largely covered by a cover are usually used. This means that it is no longer possible to discharge products randomly onto any part of the conveyor belt.

Nowadays, discharge modules which are arranged in openings in the cover are generally used. By means of these discharge modules, it is possible to discharge bulk goods onto the conveyor belt through the cover. Depending on the position of the ship and the location on the ship where the products are situated, the discharge module with the most suitable position is chosen. However, in this case, several discharge modules will have to be provided, which will result in costs. Moreover, this also demands that the unloading unit be flexible to a certain degree, as it is not possible to discharge cargo in any desired location. Unloading and transporting bulk goods by means of conveyor belts which are covered by a cover is therefore much more complicated than unloading and transporting bulk goods by means of non-covered conveyor belts.

Displaceable discharge modules are already provided. In order to be able to displace these discharge modules, specific covers are provided, being covers which, in addition to covering strips, also comprise additional elements, so that the covering strips are movable in such a manner that they are movable apart and are movable back towards each other and this during the movement of the discharge module. Such a specific cover is described in KR 2010 0101731. In addition to two covering strips, this cover here also comprises guide rollers, hinges, supports and elastic elements which are attached at the location of said covering strips and this along the entire length of both covering strips. Since additional elements have to be provided along the entire length of the covering strips here, this is a laborious way of rendering the discharge module displaceable.

It is therefore an object of the invention to provide an abovementioned assembly of a cover and a discharge module wherein displacement of the discharge module is made possible in a less laborious way, so that the unloading and transporting of bulk goods by means of conveyor belts which are covered by a cover is simplified.

This object is achieved by providing an assembly as is illustrated in paragraph 1 of the present description, wherein the discharge module is configured in order to, during its displacement and viewed along the direction of displacement, move said edge parts apart at the front and move them towards each other again at the back, so as to make the edge parts adjoin each other.

Here, the discharge module is configured to, during its displacement and viewed along the direction of displacement, move said edge parts apart at the front and move them towards each other again at the back. This means that here the discharge module itself will ensure that the covering strips perform the desired movement and thus no additional and complicated elements have to be provided here at the location of the covering strips.

The discharge module is displaceable with respect to the cover virtually along said direction. Here, the discharge module is displaceable along both senses of direction. That which is termed as the front and that which is termed as the back of the discharge module is determined by the direction of the displacement. During the displacement of the discharge module, the front will move said edge parts apart and, at the location of the rear, the edge parts will be moved towards each other again. This is preferably achieved by moving the edge parts respectively outwards and back inwards.

In use, the cover is configured to largely cover the top side of a conveyor belt. In other words, the bulk goods which are dischargeable through the cover by means of the discharge module are thus dischargeable onto the conveyor belt. Here, the first covering strip is configured to cover a first part of the top side of the conveyor belt and the second covering strip is then configured here to cover a second part of the top side of the conveyor belt, wherein this first and this second part extend virtually alongside each other, viewed in said direction. Preferably, said direction will extend in the longitudinal direction of the conveyor belt, as a result of which said first part and said second part of the top side of the conveyor belt each extend along the longitudinal direction of the conveyor belt. The discharge module is therefore displaceable with respect to the cover along the longitudinal direction of the conveyor belt.

The covering strips extend on either side of the discharge module. This means that the cover is open at the location of the discharge module and the edge parts of the covering strips thus do not adjoin each other. Here, the discharge module extends between the covering strips.

Here, the cover may also be referred to by the term 'covering'. The covering strips preferably have virtually identical dimensions. It is then possible to refer to two cover halves or two covering halves, wherein each cover half is configured to cover virtually one half of the top side of the conveyor belt. The covering strips are for example rectangular strips, these strips then each having a first end edge and a second end edge which is situated opposite this end edge. The second end edges are then preferably connected to the conveyor belt on both sides of the conveyor belt and the first end edges then form part of the edge parts, so that the cover forms an aesthetically pleasing covering unit for the top side of the conveyor belt.

With this assembly according to the invention, the cover is only opened at the location of the discharge module. The reason for this is that the edge parts adjoin each other at said other positions. This means that this assembly is readily able to largely cover the top side of a conveyor belt and thus protect the bulk goods transported by the conveyor belt against soiling and/or rain. As the discharge module is displaceable along said direction, it is possible to choose at which location on the conveyor belt discharging should be effected. For example, if this assembly is to be used in a port, it is readily possible to put the bulk goods on the conveyor belt independently of the position of the ship and the location on the ship from where the bulk goods are unloaded and independently of the unloading unit used, as it is possible to displace the discharge module to a position where unloading can take place under ideal circumstances. Here, unloading will not have to be interrupted, or at least to a lesser degree, as the discharge module can simply be displaced during unloading if this is necessary. As a result thereof, unloading can also take place much more quickly.

As in this case the discharge module itself makes sure that the edge parts are moved apart and brought back together again, there is no need here to provide many complicated elements at the location of the covering strips in order to bring about the moving apart and bringing back together of the covering strips. The opening of the cover and closing of the cover takes place during the displacement of the discharge module itself, as a result of which no separate operations have to be performed before the displacement of the discharge module to move the edge parts apart and no separate operations have to be performed to reconnect the edge parts with each other after the displacement of the discharge module. This ensures that the top side of the conveyor belt is always well-covered and is protected from rain and/or soiling.

Here, it suffices to provide an assembly with one discharge module. Obviously, it is also possible to provide an assembly with two or several said discharge modules which are displaceable along said direction.

Preferably, the discharge module comprises a funnel through which bulk goods are dischargeable. This funnel is then preferably arranged centrally, viewed along said direction. If the discharge module comprises a funnel, the discharge module may comprise one or several covering elements which are arranged adjacent to the funnel and leave the funnel clear. In this way, the conveyor belt is only accessible via the funnel.

Also preferably, the discharge module is wheelable in said direction or the discharge module is connectable to a mobile device which is wheelable in said direction. Thus, it is easily possible to displace the discharge module in said direction. The mobile device is, for example, an unloading unit, such as a ship unloader.

In a preferred embodiment, the covering strips each comprise a first outer surface, wherein the first outer surfaces are configured to be directed towards the conveyor belt, and that, in use, the first outer surfaces lean against the discharge module. At the location of the discharge module, the covering strips here then lean against the discharge module, so that rain and/or soiling is displaceable through the cover at the location of the discharge module with difficulty. Here, virtually only bulk goods are then displaceable through the cover at the location of the discharge module. By the covering strips leaning against the discharge module here, these are also kept open in an optimum and fixed way, as a result of which the edge parts can move apart in a satisfactory manner and can also move back together in a satisfactory manner.

Furthermore preferably, the discharge module comprises a holding-open device in order to move said edge parts apart at the front and move them towards each other again at the back during displacement of the discharge module and viewed in the direction of displacement, wherein this holding-open device is elongate and is configured to virtually extend in said direction and wherein the holding-open device comprises a first set of one or several holding-open elements and comprises a second set of one or several holding-open elements, wherein the first outer surface of the first covering strip is configured to lean against said first set and the first outer surface of the second covering strip is configured to lean against said second set, wherein the distance between the first set and the second set initially increases and then decreases again, viewed along said direction, so that, viewed along said direction and at the location of the discharge module, the distance between the edge parts initially increases and then decreases again. Here, the sets of one or several holding-open elements hold the covering strips apart, so that bulk goods are dischargeable between the covering strips and thus through the cover. Due to the fact that the distance first increases and then decreases again, the edge parts will move apart well here and will continue to move further apart during the displacement of the discharge module in order to eventually move back together, so that the edge parts will adjoin each other again at the back of the discharge module. In this way, it is readily possible to move the edge parts a sufficiently large distance apart for the bulk goods to be readily dischargeable through the cover. Here, the holding-open elements will push the covering strips apart at the front and thus push them outwards in order to then move the covering strips back together later, so that the edge parts can adjoin each other again. Here, said first set extends largely opposite said second set and at the location of both sides of the discharge module, viewed along said direction. Viewing the assembly from above in use, the first set and the second set form the respective left side and the right side, or vice versa, of the discharge module, as a result of which the holding-open elements are perfectly able to push the covering strips apart.

Furthermore preferably, the distance between the first set and the second set gradually increases only to then gradually decrease again, viewed along said direction, so that, viewed along said direction and at the location of the discharge module, the distance between the edge parts gradually increases and then gradually decreases again. In the centre, the distance may remain the same over a certain length. Also furthermore preferably, the holding-open device is virtually symmetrical along a plane which extends at right angles to said direction. In this way, the discharge module is readily displaceable along both senses of direction and moving the edge parts apart and moving the edge parts back to adjoin each other again always works well.

Still more preferably, the holding-open elements are rod-shaped elements. By means of one or several rod-shaped elements, it is easily possible to push the covering strips apart. Rod-shaped elements are easy to produce, allow simple construction of the holding-open device and make a construction which uses little material possible.

Also furthermore preferably, a said set of one or several holding-open elements comprises at least two holding-open elements, wherein, in use, these holding-open elements extend one above the other and extend substantially at a distance from each other. By means of two holding-open elements, a said set is better able to push the respective covering strip outwards and is thus better able to move the edge parts apart and it is also easier to pass the covering strip back inside, making it easier to move the edge parts back together. Said holding-open elements extend one above the other and substantially at a distance from each other. The expression substantially at a distance from each other is understood to mean that said holding-open elements do not have to extend at a distance from each other in all positions, viewed along said direction. Thus, the ends of the holding-open elements may even lie against each other. Furthermore preferably, viewed along said direction, the distance between the last-mentioned holding-open elements first increases and then decreases again.

The holding-open device furthermore preferably comprises a carrying structure which extends between said sets of one or several holding-open elements and the holding-open device preferably comprises one or several spacers, wherein the one or several spacers are connected to the carrying structure and wherein the one or several spacers position the sets of one or several holding-open elements at least partly at a distance from the carrying structure. By means of a carrying structure and spacers, it is easily possible to position the holding-open elements in such a way that the holding-open elements are readily able to move the edge parts apart and move them back together again. This is also a simple setup which can be achieved using little material and can therefore be of a lightweight design. This setup may be an open structure, so that it will essentially not inhibit the discharging of bulk goods. The carrying structure may, for example, comprise one elongate beam which is configured to extend substantially along said direction. The holding-open device may then comprise two sets of one or several spacers, in which case these sets extend to the left and to the right of the carrying structure, viewed from above, and thus will position a said set of one or several holding-open elements to the left and to the right, respectively. The carrying structure may also comprise several beams, with these beams ensuring that the holding-open device is sufficiently strong.

Still further preferably, the discharge module comprises a funnel through which bulk goods are dischargeable and the funnel is arranged at the location of at least one said spacer so that bulk goods are dischargeable between said sets of one or several holding-open elements.

In a preferred embodiment, said edge part of the first covering strip extends at the top of said edge part of the second covering strip when said edge parts adjoin each other. Using the discharge module, it is simple to move the edge parts apart and bring them back together again so that they adjoin, if the edge parts adjoin each other in this way.

Furthermore preferably, the shape of the discharge module is adapted in such a way that, during displacement of the discharge module and viewed in the direction of displacement, the discharge module first moves the edge part of the first covering strip. If the discharge module is equipped with a said holding-open device, the shape of the holding-open device is adapted in the abovementioned way. By first moving the first edge part by, for example, moving the first covering strip outwards first, the first covering strip will not impede movement of the edge part of the second covering strip, as a result of which it is easily possible to move the edge parts apart and to bring the covering strips a distance apart, so that the discharge module extends between the covering strips. Furthermore preferably, the shape of the discharge module is then also adapted in such a way that, during displacement of the discharge module and viewed in the direction of displacement, the discharge module firstly brings the edge part of the second covering strip into position at the back, which has this edge part in the state in which the edge parts adjoin each other, following which the discharge module places the edge part of the first covering strip onto the edge part of the second covering strip.

Furthermore even more preferably, viewed along said direction at the location of the front and the rear of the carrying structure, the maximum distance of the first set of one or several holding-open elements to the carrying structure is greater than the maximum distance of the second set of one or several holding-open elements to the carrying structure. Here, the holding-open device is then asymmetrical, viewed along a plane which extends along said direction. The holding-open device may, for example, be asymmetrical along a plane which extends centrally through the carrying structure along said direction. During the displacement of the discharge module and viewed in the direction of displacement at the front, said first set is very readily able here to move the edge part of the first covering strip outwards before said second set moves the edge part of the second covering strip outwards. During the displacement of the discharge module and viewed in the direction of displacement at the rear, said first set is very readily able here to arrange the edge part of the first covering strip on the edge part of the second covering strip.

In a preferred embodiment, the covering strips each comprise a first outer surface, wherein the first outer surfaces are configured to be directed towards the conveyor belt, and the edge part of the first covering strip, at the location of the first outer surface, comprises a projecting element which is configured to engage with the second covering strip, so that the first covering strip can adjoin the second covering strip. By means of this projecting element, the first covering strip will securely adjoin the second covering strip. In addition, this projecting element ensures that the edge parts are able to readily move apart and move back together. This projection is for example a guide strip which extends along the longitudinal direction of the covering strip.

In a highly preferred embodiment, the assembly, at the front and back of the discharge module, viewed in the direction of displacement, comprises one or several push elements for bringing the edge parts back together again. By means of these push elements, it is ensured that the edge parts adjoin each other at the location of the other said positions. Preferably, these push elements are movable push elements. These push elements may, for example, be arranged pivotably with respect to an axis which extends along said direction, so that these will exert a downwardly directed force and will thus push the edge parts securely towards each other.

In a preferred embodiment, the discharge module comprises a funnel through which bulk goods are dischargeable and the discharge module comprises one or several guide elements on either side, viewed along said direction, wherein these guide elements are arranged on the underside of the funnel and are configured to guide the discharged bulk goods along. By means of these guide elements, it is ensured that bulk goods reliably land on the movable part of the conveyor belt. For example, with a conveyor belt having a rotatable band, the guide elements will ensure that the bulk goods end up on the rotatable band. These guide elements are configured in order to preferably extend along said direction.

The covering strips are preferably substantially made of plastic. Furthermore, the covering strips are preferably watertight, so that rain cannot enter through the covering strips. The covering strips may be of single-layer construction, but may also comprise multiple layers. Thus, if the covering strips comprise a said first outer surface and a second outer surface situated opposite the first outer surface, they may have three layers and comprise a top layer which forms the second outer surface, comprise a bottom layer which forms the first outer surface and comprise an intermediate layer. The intermediate layer may, for example, be a polyester fabric. The stiffness of the covering strip may, for example, be greater in one direction than in another direction at right angles to this first direction. In use, the stiffness, viewed along a direction at right angles to said direction, is preferably greater than the stiffness viewed along said direction. In this way, the edge parts smoothly move apart at the location of the position of the discharge module, but they are also pushed together reliably in the other positions.

The present invention also relates to a transport device comprising a conveyor belt, a cover which largely covers the top side of the conveyor belt and a discharge module which extends through the cover from above, so that bulk goods are dischargeable onto the conveyor belt through the cover by means of the discharge module, wherein the cover and the discharge module form an assembly as illustrated above. All advantages and preferred embodiments of this assembly therefore also apply to this transport device.

In the description below, an assembly and a transport device according to the present invention are described in detail. The sole aim of this detailed description is to indicate how the invention may be implemented and to illustrate the specific features of the invention and, if necessary, provide further explanation. This description thus cannot be seen as a limitation of the scope of protection of this patent. Neither can the area of application of the invention be limited on the basis of the following description.

In this description, reference is made to the attached figures, in which:

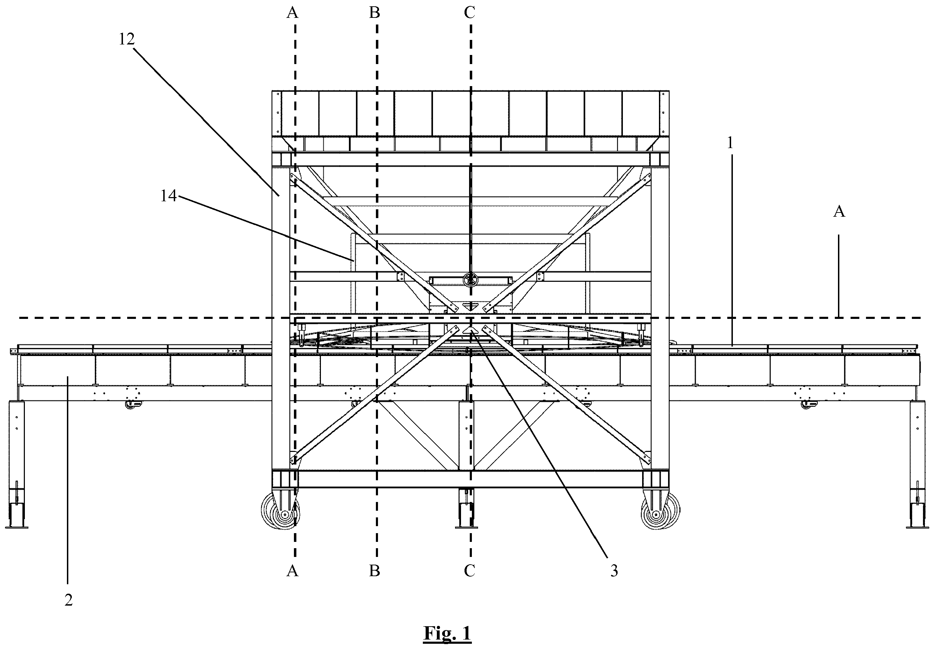

- ***Fig. 1*** shows a side view of a transport device according to the invention and a portion of a ship unloader;
- ***Fig. 2*** shows a perspective view of the transport device illustrated in Fig. 1;
- ***Fig. 3*** shows a perspective view of the discharge module and the portion of the ship unloader illustrated in Fig. 1, in which not all components of the ship unloader have been illustrated, so that the discharge module is clearly visible;
- ***Fig. 4*** shows a top view of the transport device and the portion of the ship unloader illustrated in Fig. 1, in which not all components of the ship unloader have been illustrated, so that the discharge module is visible;

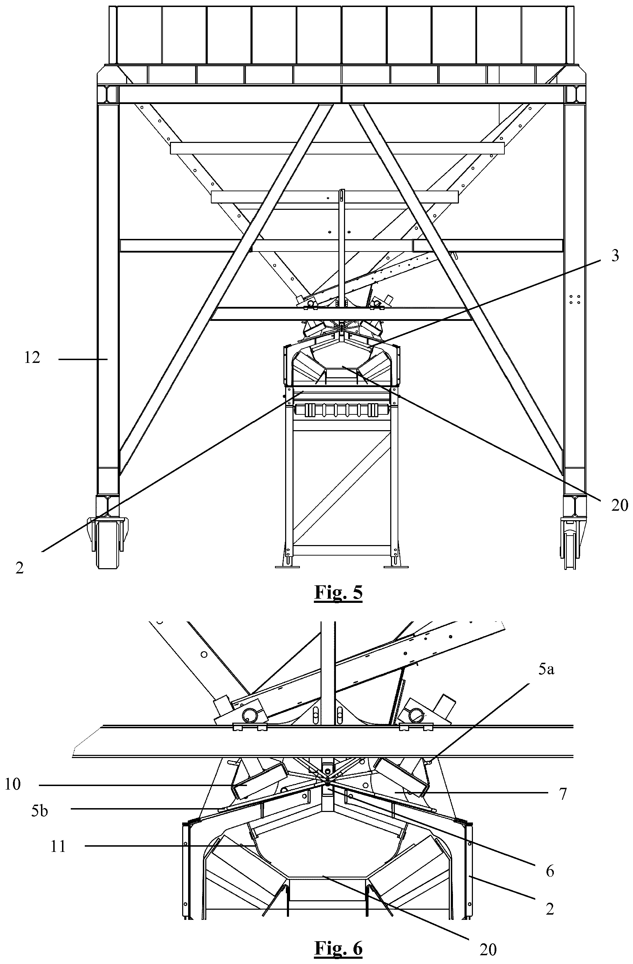

- ***Fig. 5*** shows a front view of the transport device and the portion of a ship unloader illustrated in Fig. 1;
- ***Fig. 6*** shows a detail view of Fig. 5;
- ***Fig. 7*** shows a detail view of a cross section through the cover;
- ***Fig. 8*** shows a detail view of a cross section through Fig. 1 along line A-A;

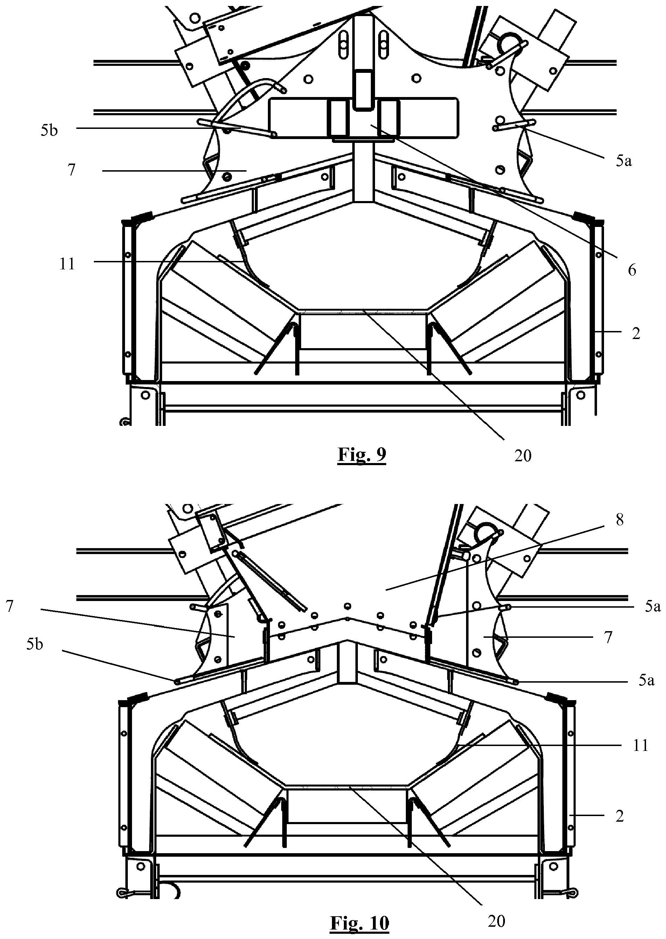

- ***Fig. 9*** shows a detail view of a cross section through Fig. 1 along line B-B;
- ***Fig. 10*** shows a detail view of a cross section through Fig. 1 along line C-C;
- ***Fig. 11*** shows a top view of the discharge module;
- ***Fig. 12*** shows a perspective view of the discharge module;
- ***Fig. 13*** shows a perspective view of an alternative embodiment of a holding-open device of the discharge module;
- ***Fig. 14*** shows a top view of the holding-open device illustrated in Fig. 13.

The transport device illustrated here comprises a conveyor belt (2), a cover (1) and a discharge module (3). Here, only the portion of the conveyor belt (2) is illustrated which is situated at the location of the discharge module (3). Here, the conveyor belt (2) is an elongate conveyor belt (2) which is configured to be positioned on the quayside and to extend along a specific direction (A). This conveyor belt (2) is used to transport bulk goods, which have been unloaded from a ship, to the desired location. The conveyor belt (2) comprises at least one movable band (20) which is configured to transport the bulk goods to the end of the conveyor belt (2), viewed along said direction (A).

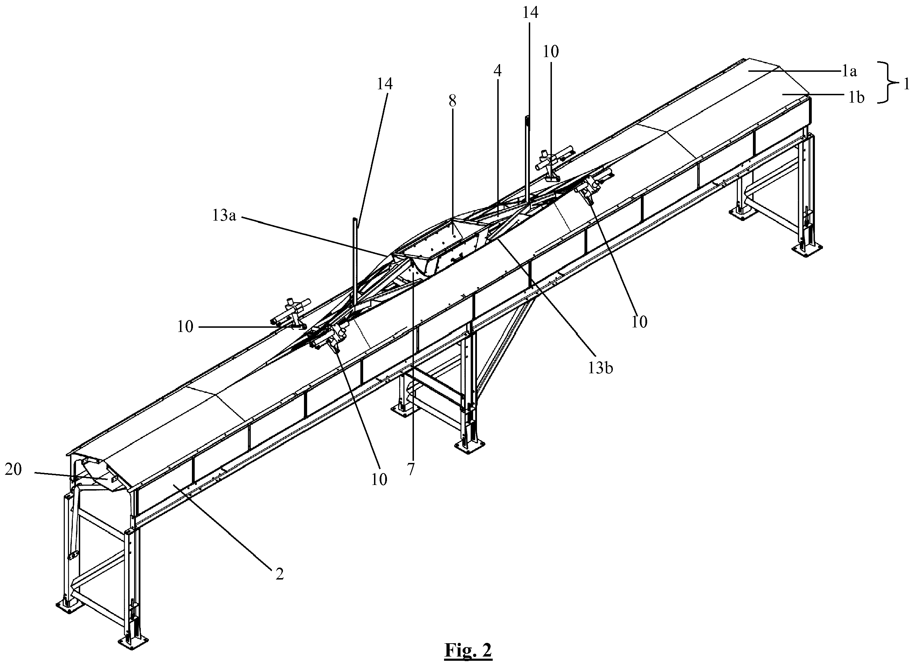

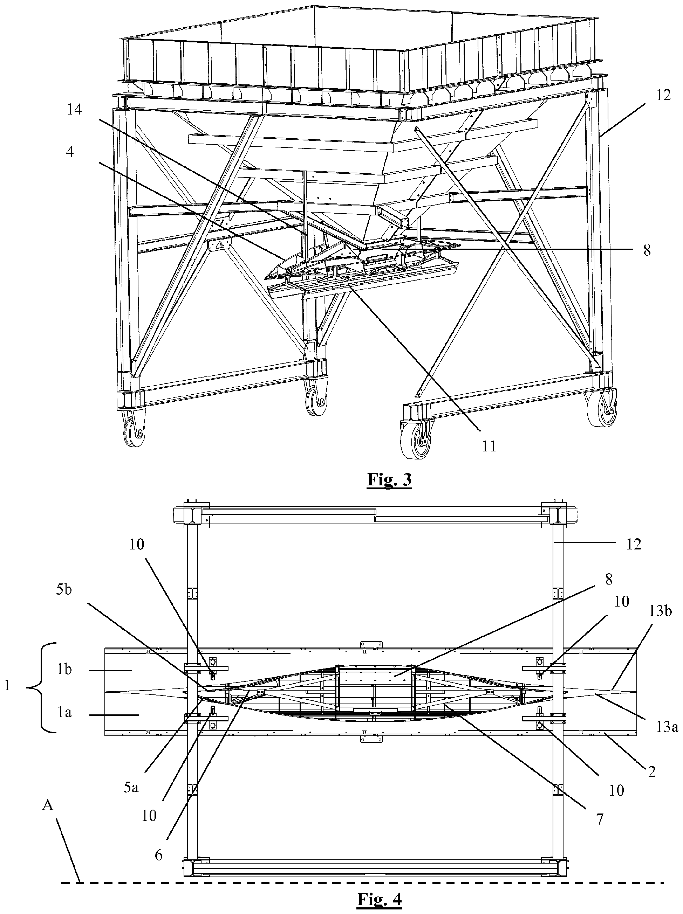

The cover (1) comprises two flexible covering strips (1a, 1b). These two covering strips (1a, 1b) are elongate, rectangular in shape and have virtually identical dimensions. These covering strips (1a, 1b) are configured so that together they cover the top side of the conveyor belt (2), thus preventing rain and/or pollutants from ending up on the movable band (20). The covering strips (1a, 1b) each have a first edge part (13a, 13b) which extends in the longitudinal direction of the respective covering strip (1a, 1b) along virtually the entire length of the respective covering strip (1a, 1b) and each have a second edge part which is situated opposite the respective said first edge part (13a, 13b), wherein said second edge parts on either side of the conveyor belt (2), viewed along said direction (A), are connected to the conveyor belt (2). Furthermore, the covering strips (1a, 1b) extend along said direction (A) in such a way that the covering strips (1a, 1b) extend on either side of the discharge module (3) and thus at a distance apart at the location of the position of the discharge module (3) and that, at the location of the other positions, the covering strips (1a, 1b) extend largely next to each other and each cover virtually half of the top side of the conveyor belt (2) and they adjoin each other at the location of their first edge parts (13a, 13b), so that the covering strips (1a, 1b) together form a covering unit for the top side of the conveyor belt (2). This is all very clearly visible in Figs. 2 and 4.

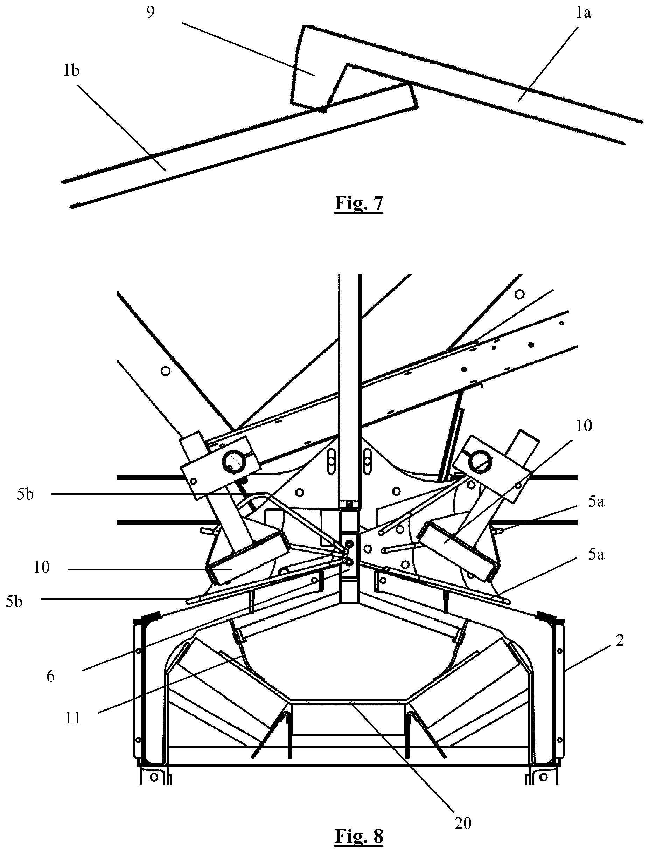

The covering strips (1a, 1b) each comprise a first outer surface which is configured to be directed towards the movable band (20) and a second outer surface which is situated opposite the first outer surface. If the first edge parts (13a, 13b) adjoin one another, the first edge part (13a) of the first covering strip (1a) is situated on top of the first edge part (13b) of the second covering strip (1b) and the first covering strip (1a) comprises a guide strip (9) at the location of the first outer surface and the first edge part (13a), wherein this guide strip (9) extends in the longitudinal direction of the first covering strip (1a) along virtually the entire length of the first covering strip (1a). The first covering strip (1a) adjoins the second covering strip (1b) by means of the guide strip (9). This is clearly visible in Fig. 7.

The discharge module (3) inter alia comprises a holding-open device (4), a funnel (8) and guide elements (11). The discharge module (3) is connectable to a ship unloader (12) by means of connecting elements (14).

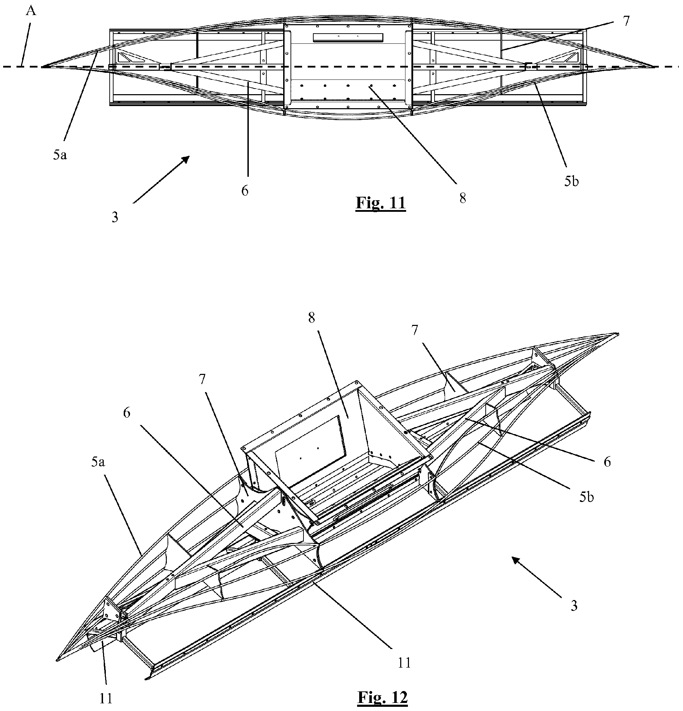

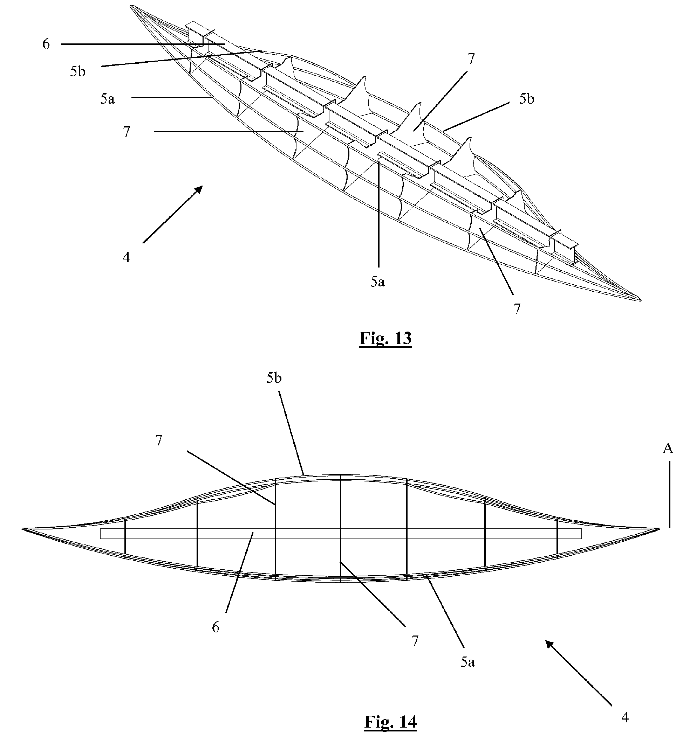

The discharge module (3) is illustrated separately in Figs. 11 and 12. Figs. 13 and 14 illustrate an alternative embodiment of the holding-open device (4). In both embodiments, the holding-open device (4) is elongate and, in use, extends along said direction (A). The holding-open device (4) comprises a carrying structure (6). In Figs. 11 and 12, this carrying structure (6) comprises several beams. In Figs. 13 and 14, the carrying structure (6) is a supporting beam. Furthermore, the holding-open device (4) comprises a first set of holding-open elements (5a) and a second set of holding-open elements (5b), wherein these two sets extend on either side of the carrying structure (6), viewed in accordance with the top views illustrated in Figs. 11 and 14. Furthermore, the holding-open device (4) comprises spacers (7), wherein the spacers (7) are connected to the carrying structure (6). The spacers (7) position the sets of holding-open elements (5a, 5b) at the desired distance from the carrying structure (6).

In use, the discharge module (3) with its holding-open device (4) extends between the covering strips (1a, 1b) in such a manner that the covering strips (1a, 1b) extend on either side of the holding-open device (4), being to the left and right, viewed according to said top views, and thus at a distance apart, at the location of the position of the discharge module (3). The first covering strip (1a) leans against the first set of holding-open elements (5a) and the second covering strip (1b) leans against the second set of holding-open elements (5b). Furthermore, the discharge module (3) is displaceable with respect to the cover (1) along virtually said direction (A) and this in both senses, and the holding-open device (4) is configured to, during its displacement and viewed in the direction of displacement, move said first edge parts (13a, 13b) at the front apart and move them towards each other again at the back, in order to cause the first edge parts (13a, 13b) to adjoin each other. The shape of the holding-open device (4) is adapted such that, during the displacement of the discharge module (3) and viewed in the direction of displacement, the holding-open device (4) firstly moves the first covering strip (1a) at the front outwards and only moves the second covering strip (1b) outwards after. The reason for this is that, at the front and back, the holding-open elements (5a) of the first set of holding-open elements (5a) move apart more quickly, viewed along the vertical direction, and also extend further from the carrying structure (6) more quickly compared to the holding-open elements (5b) of the second set of holding-open elements (5b). This is clearly illustrated in Figs. 11 and 14. As a result thereof, during the displacement of the discharge module (3), the first covering strip (1a) is pushed outwards first at the front, only after which is the second covering strip (1b) pushed outwards. Furthermore, the holding-open device (4) in both embodiments is virtually symmetrical along a plane at right angles to said direction (A).

The transport device comprises, at the location of the discharge module (3) at the front and back, two push elements (10) which are upwardly and downwardly pivotable about an axis which extends along said direction (A). Here, these push elements (10) are connected to the ship unloader (12). These push elements (10) push the first edge parts (13a, 13b) towards each other. As a result of the design of the holding-open device (4), the first edge parts (13a, 13b) at the back already move towards each other, since the first outer surfaces lean against their respective set of holding-open elements (5a, 5b). By means of the push elements (10), the first edge parts (13a, 13b) are additionally moved towards each other, so that the first outer surfaces will reliably lean against their respective set of holding-open elements (5a, 5b) and the first edge parts (13a, 13b) reliably adjoin each other again after the discharge module (3) has passed.

Furthermore, the discharge module (3) centrally also comprises a funnel (8) which is arranged between the two said sets of holding-open elements (5a, 5b), so that bulk goods are dischargeable between the two said sets of holding-open elements (5a, 5b) by means of the funnel (8) and are thus dischargeable onto the movable band (20). On either side, viewed along said direction (A) and viewed from above, the discharge module (3) comprises two guide elements (11), wherein these guide elements (11) extend underneath the funnel (8) and are configured to guide the bulk goods which are discharged via the funnel (8) along to the movable band (20).

Preferably, this ship unloader (12) is wheelable in said direction (A). By then moving the ship unloader (12) in said direction (A), the discharge module (3) is then displaced in said direction (A).

## Claims

1. Assembly of a cover (1), for largely covering the top side of a conveyor belt (2), and a discharge module (3), wherein, in use, the discharge module (3) extends through the cover (1) from above, so that bulk goods are dischargeable through the cover (1) by means of the discharge module (3), wherein the cover (1) comprises a first and a second flexible elongate covering strip (1a, 1b), wherein these covering strips (1a, 1b) are each respectively provided in order to largely cover a part of both parts of the top side of a conveyor belt (2) and thus to largely cover the top side of a conveyor belt (2) together, wherein the covering strips (1a, 1b) are joinable to each other along virtually their entire length and to this end each comprise an edge part (13a, 13b) which extends along the longitudinal direction and along virtually the entire length of the respective covering strip (1a, 1b), and that, in use, the covering strips (1a, 1b) extend substantially along the same direction (A) and next to each other, the covering strips (1a, 1b) extend on either side of the discharge module (3) at the location of the position of the discharge module (3), and at the location of other positions, the edge parts (13a, 13b) of the covering strips (1a, 1b) adjoin each other virtually completely, and wherein the discharge module (3) is displaceable with respect to the cover (1) along virtually said direction (A), **characterized in that** the discharge module (3) is configured in order to, during its displacement and viewed along the direction of displacement, move said edge parts (13a, 13b) apart at the front and move them towards each other again at the back, so as to make the edge parts (13a, 13b) adjoin each other.

2. Assembly according to Claim 1, **characterized in that** the covering strips (1a, 1b) each comprise a first outer surface, wherein the first outer surfaces are configured to be directed towards the conveyor belt (2), and **in that**, in use, the first outer surfaces lean against the discharge module (3).

3. Assembly according to Claim 2, **characterized in that** the discharge module (3) comprises a holding-open device (4) in order to move said edge parts (13a, 13b) apart at the front and move them towards each other again at the back during displacement of the discharge module (3) and viewed in the direction of displacement, wherein this holding-open device (4) is elongate and is configured to virtually extend in said direction (A) and wherein the holding-open device (4) comprises a first set of one or several holding-open elements (5a) and comprises a second set of one or several holding-open elements (5b), wherein the first outer surface of the first covering strip (1a) is configured to lean against said first set and the first outer surface of the second covering strip (1b) is configured to lean against said second set, wherein the distance between the first set and the second set initially increases and then decreases again, viewed along said direction (A), so that, viewed along said direction (A) and at the location of the discharge module (3), the distance between the edge parts (13a, 13b) initially increases and then decreases again.

4. Assembly according to Claim 3, **characterized in that** the holding-open elements (5a, 5b) are rod-shaped elements.

5. Assembly according to Claim 3 or 4, **characterized in that** a said set of one or several holding-open elements (5a, 5b) comprises at least two holding-open elements (5a, 5b), wherein, in use, these holding-open elements (5a, 5b) extend one above the other and extend substantially at a distance from each other.

6. Assembly according to one of Claims 3 to 5, **characterized in that** the holding-open device (4) comprises a carrying structure (6) which extends between said sets of one or several holding-open elements (5a, 5b), and **in that** the holding-open device (4) comprises one or several spacers (7), wherein the one or several spacers (7) are connected to the carrying structure (6) and wherein the one or several spacers (7) position the sets of one or several holding-open elements (5a, 5b) at least partly at a distance from the carrying structure (6).

7. Assembly according to Claim 6, **characterized in that** the discharge module (3) comprises a funnel (8) through which bulk goods are dischargeable, and **in that** the funnel (8) is arranged at the location of at least one said spacer (7) so that bulk goods are dischargeable between said sets of one or several holding-open elements (5a, 5b).

8. Assembly according to one of the preceding claims, **characterized in that** said edge part (13a) of the first covering strip (1a) extends at the top of said edge part (13b) of the second covering strip (1b) when said edge parts (13a, 13b) adjoin each other.

9. Assembly according to Claim 8, **characterized in that** the shape of the discharge module (3) is adapted in such a way that, during displacement of the discharge module (3) and viewed in the direction of displacement, the discharge module (3) first moves the edge part (13a) of the first covering strip (1a).

10. Assembly according to Claims 6 and 9, **characterized in that**, viewed along said direction (A) at the location of the front and the rear of the carrying structure (6), the maximum distance of the first set of one or several holding-open elements (5a) to the carrying structure (6) is greater than the maximum distance of the second set of one or several holding-open elements (5b) to the carrying structure (6).

11. Assembly according to one of the preceding claims, **characterized in that** the covering strips (1a, 1b) each comprise a first outer surface, wherein the first outer surfaces are configured to be directed towards the conveyor belt (2), and the edge part (13a) of the first covering strip (1a), at the location of the first outer surface, comprises a projecting element (9) which is configured to engage with the second covering strip (1b), so that the first covering strip (1a) adjoins the second covering strip (1b).

12. Assembly according to one of the preceding claims, **characterized in that** the assembly, at the front and back of the discharge module (3), viewed in the direction of displacement, comprises one or several push elements (10) for bringing the edge parts (13a, 13b) back together again.

13. Assembly according to one of the preceding claims, **characterized in that** the discharge module (3) comprises a funnel (8) through which bulk goods are dischargeable, and **in that** the discharge module (3) comprises one or several guide elements (11) on either side, viewed along said direction (A), wherein these guide elements (11) are arranged on the underside of the funnel (8) and are configured to guide the discharged bulk goods along.

14. Transport device comprising a conveyor belt (2), a cover (1) which largely covers the top side of the conveyor belt (2) and a discharge module (3) which extends through the cover (1) from above, so that bulk goods are dischargeable onto the conveyor belt (2) through the cover (1) by means of the discharge module (3), **characterized in that** the cover (1) and the discharge module (3) form part of an assembly according to one or several of Claims 1 to 13.
